# EUROPEAN PATENT SPECIFICATION

(11) **EP 2 113 051 B1**
(45) Date of publication and mention of the grant of the patent: **26.06.2013**
(21) Application number: 08709505.5
(22) Date of filing: 22.02.2008
(51) Int. Cl.: F01D 15/10, F02B 37/00, F02C 6/12, F02B 41/10

(54) **AN AUXILLARY POWER GENERATION APPARATUS**
HILFSKRAFTERZEUGUNGSVORRICHTUNG
APPAREIL DE PRODUCTION D'ENERGIE AUXILIAIRE

(30) Priority: 22.02.2007 GB 0703488
(43) Date of publication of application: 04.11.2009
(73) Proprietor: BOWMAN POWER GROUP LIMITED, Hampshire SO14 5QY (GB)
(72) Inventor: MCGUIRE, Jonathan, Hampshire SO14 5QY (GB)
(74) Representative: Miller, James Lionel Woolverton
(86) International application number: PCT/GB2008/000623
(87) International publication number: WO 2008/102160

(56) References cited:
- US-A- 2 848 866
- US-A- 4 474 007
- US-A- 5 056 315
- US-B1- 6 324 846

## Description

The present invention concerns an auxillary power generation apparatus, a vehicle comprising an auxillary power generation apparatus and a method of providing power to an ancillary electrical load whilst a reciprocating engine is switched off. The invention also extends to a method of reducing emissions from a reciprocating engine.

Situations can arise in which electrical power is required for powering ancillary electrical loads whilst a main reciprocating engine is switched off. Such ancillary electrical loads could include the lights, heating or radio functions of a vehicle. For example, the driver of a refrigeration truck carrying foodstuffs in a refrigeration unit and travelling long distance might take a rest stop for a time. If the driver remains in the cab, he may require heating or lighting or the radio. During the time in which the truck remains stationary, the refrigeration unit needs to continue to function, otherwise the foodstuffs will become spoiled.

It is known to power such low level ancillary electrical loads using the vehicle battery. The battery charge can run low and then be recharged by the vehicle alternator once the truck is restarted. However, a drawback of this method is that the battery is vulnerable to running flat such that the vehicle cannot be restarted. Furthermore, the battery can only provide limited voltage to power the ancillary loads. This can be a disadvantage if more than one load is required simultaneously. In these circumstances, a driver may opt to keep the main engine of a vehicle running to power the ancillary loads.

In another example, it is desirable to provide power to an ancillary electrical load at a stationary site such as a concert or fair, during times when full power is not required. For example, a main reciprocating engine can provide power to a concert site during high load requirements in the evening when most or all of the lighting and audio equipment is in use, but to run the reciprocating engine during the daytime prior to the concert may waste power since perhaps only a fraction of the lights, microphones and amplifiers will be required at any one time and the load requirement is relatively low.

It is therefore an effect of the present invention to provide an alternative apparatus and method of providing power for use in powering an ancillary electrical load whilst a reciprocating engine is switched off.

The invention is as claimed in the independent claims. Preferred or optional features are set out in the dependent claims.

According to a first aspect of the invention, there is provided an auxillary power generation apparatus for powering an ancillary electrical load whilst a reciprocating engine is switched off, the apparatus comprising a combustor arranged for disposal in an exhaust conduit of the reciprocating engine, a compressor arranged in fluid communication with an inlet of the combustor for the supply of compressed air to the combustor, a turbogenerator arranged for converting combustion product from the combustor into electrical energy, and a controller for controlling the supply of electrical energy to the ancillary electrical load.

An advantage of this arrangement when used in a vehicle is that auxillary power can be provided for longer spells than is possible using the vehicle battery alone, without risk of running the battery flat. Where the apparatus is used in a stationary power generation apparatus, electrical power can be generated more efficiently at low electrical load than if the reciprocating engine is run.

The combustor may be fuelled by a relatively clean fuel such as liquid petroleum gas (LPG) which has environmental benefits over keeping the reciprocating engine running. As LPG is generally cheaper than is petrol or diesel fuel, the user of a vehicle/stationary power generation apparatus can run the auxillary power generation apparatus in order to save fuel costs. The auxillary power apparatus may also produce less noise and vibration than is generated by running the main reciprocating engine and can reduce usage of the engine and hence increase engine life.

The combustor may be a hydrocarbon based selective catalytic combustor. As such, it may replace an oxidation stage catalyst of a catalytic converter. The combustor may comprise a first oxidation stage and a second reduction stage.

The compressor may be an electrically driven compressor.

The apparatus may be installed on a vehicle. A vehicle upon which the apparatus is installed may further comprise a turbocharger disposed in the engine exhaust conduit between the engine and the combustor.

According to a second aspect of the invention, there is provided a method of providing power to an ancillary electrical load whilst a reciprocating engine is switched off, the reciprocating engine having an exhaust conduit, a combustor disposed in the exhaust conduit, a compressor arranged in fluid communication with an inlet of the combustor for the supply of compressed air to the combustor, and a turbogenerator arranged to be driven by combustion gas from the combustor; the method comprising compressing air in the compressor, introducing the compressed air into the inlet of the combustor, mixing the compressed air with a fuel so as to cause combustion, using the combustion gas to drive the turbogenerator for the generation of electrical power, and supplying at least a portion of the electrical power to an ancillary electrical load.

It has been found that the apparatus may also be operated to increase the power output of the turbogenerator whilst the reciprocating engine is running.

Thus according to a yet further aspect of the invention, there is provided a method of operating a reciprocating engine, the engine having an exhaust conduit, a combustor disposed in the exhaust conduit, the combustor having an inlet being in fluid communication with exhaust gas in the exhaust conduit, the method comprising introducing the exhaust gas into an inlet of the combustor, mixing the gas with a fuel so as to cause combustion, and exhausting the combusted gases to atmosphere.

The apparatus as operated in this manner may increase the power output of the turbogenerator whilst the reciprocating engine is running.

The method has a particular advantage in that it can lead to improved emissions performance of the engine. For example, it is known that too much air in the exhaust gas can lead to rusting of a catalytic converter used for NOx reduction of the exhaust gas from a diesel engine. In the method of the present aspect of the invention, excess oxygen in the exhaust gas is used in the combustion reaction in the combustor, reducing the amount of oxygen in the gas leaving the combustor. This allows the use of a 3 way catalytic converter in the exhaust downstream of the combustor for the reduction of NOx without excess air in the engine exhaust gas rusting the catalytic converter.

Furthermore, where the reciprocating engine is a diesel engine, particulate matter in the exhaust gas is reduced as at least a certain amount of it is burnt off in the combustion process. This can reduce the amount of particulate matter entering a diesel particulate filter that may be disposed in the exhaust conduit downstream of the combustor.

The engine may further comprise an exhaust gas recirculation system disposed between an air intake of the engine and the exhaust conduit, and the method may include the step of recirculating a portion of the gas in the exhaust conduit back into the air intake of the engine via the exhaust gas recirculation system and permitting a portion of the gas in the exhaust conduit to flow through the combustor. The portion of the gas allowed to flow through the combustor may be substantially 50%.

The engine may further comprise an air intake, a turbocharger including a compressor being disposed in an air conduit of the air intake, the method comprising the further step of compressing engine air in the compressor prior to it entering the air intake.

The combustor may be a hydrocarbon based selective catalytic combustor. As such, it may replace an oxidation stage catalyst in the catalytic converter.

Exemplary embodiments of the invention will now be explained in more detail by the following non-limiting description with reference to the accompanying drawing, in which:
Figure 1 is a schematic view showing an embodiment of an auxillary power generation apparatus according to the present invention; and
Figure 2 is a schematic of a vehicle including the auxiliary power generation apparatus of Figure 1:

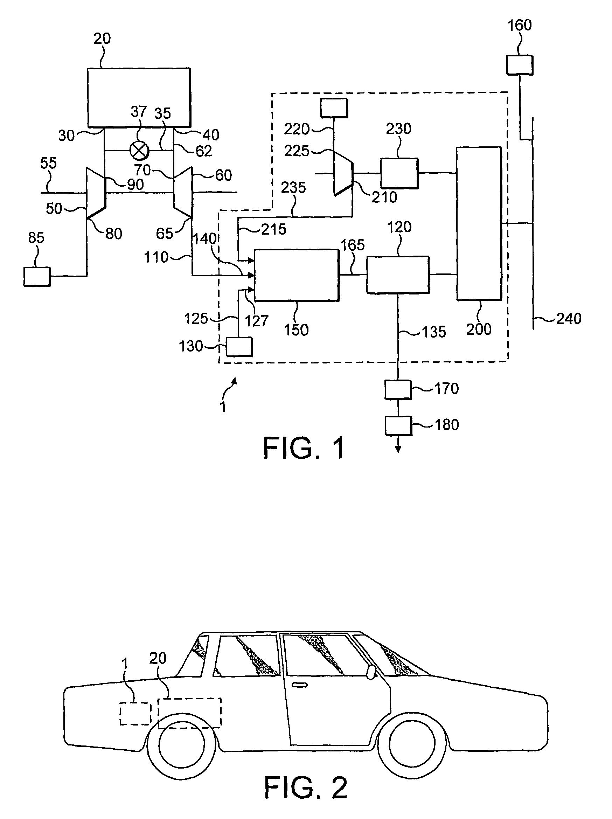

Figure 1 shows a schematic embodiment of a reciprocating engine fitted with an auxiliary power generation apparatus 1. A reciprocating engine 20 includes a turbocharger, comprising a compressor 50 and a turbine 60 each mounted on a common shaft 55. The turbine 60 includes an inlet 70 in fluid communication with an exhaust conduit 62 that extends between the turbine inlet 70 and an engine exhaust gas outlet 40 of a reciprocating engine 20. The compressor 50 comprises an inlet 80 at a low pressure side thereof, the inlet 80 being connected to an air supply 85. The compressor also has an outlet 90 at the high pressure side thereof in communication with one end of an air intake conduit, the opposite end of which is connected to the air intake 30 of the engine 20. The turbine 60 has an outlet 65 in fluid communication with a turbine exhaust conduit 110.

An exhaust gas recirculation (EGR) conduit 35 extends between the air intake conduit and the exhaust conduit of the turbo charger. The EGR conduit includes a valve 37 that can be opened to permit fluid communication between the air intake conduit and the exhaust conduit, or closed to prevent it. Thus when the valve is open, the exhaust conduit is in fluid communication with the air intake conduit via the EGR conduit 35. EGR arrangements are known in the art and are used to reduce NOx emissions of engines at low engine load. In normal use when the reciprocating engine is switched on, the EGR can thus be used to divert exhaust gas in the engine exhaust conduit back into the engine air intake 30 for recycling of the gas through the engine.

The auxiliary power generation apparatus 1 comprises a combustor 150, secondary compressor 210, turbogenerator 120 and a controller 200. The controller unit 200 distributes power as necessary to one or more ancillary loads 160 via a DC bus 240. The ancillary loads may include heating, lighting, audio equipment or a refrigeration unit or the like, depending on the application of the apparatus. The ancillary load may also be a motor generator, capacitor or the power may be added to the shaft power of the reciprocating engine for use in providing power to any appropriate power sink.

In an embodiment the combustor 150 is a catalytic reduction stage combustor such as is known in the art of gas turbine engines. In an embodiment, it comprises a first oxidation stage and a second reduction stage. The combustor 150 includes an inlet 140 that is in fluid communication with the turbine exhaust conduit 110. A fuel supply 130 is connected to the combustor 150 via a fuel supply line 125 to a fuel inlet 127 of the combustor 150. The secondary compressor 210 is connected via conduit 235 to an air inlet of the combustor 150 to provide fluid communication for compressed air flowing from the secondary compressor to the combustor 150. A valve 237 is present in the conduit 235 and is selectable to open or close the conduit depending upon operation of the engine. In particular, the valve 237 may be used to close the conduit 235 whilst the reciprocating engie 20 is running, to prevent exhaust air in the exhaust conduit flowing backwards through the conduit and into the compressor 210.

A secondary air supply line 220 feeds an air supply to an inlet 225 of the compressor 210. The compressor 210 is driven by a secondary motor 230. The motor 230 is connected to the controller 200 such that the controller 200 can provide the motor 230 with electrical power.

A combustor exhaust conduit 165 is provided at an outlet of the combustor 150. The turbogenerator 120 is disposed in the combustor exhaust conduit 165 to provide a means of generating electrical power from the energy output of the combustor 150. The turbogenerator includes a turbine (not shown) which in use is driven by waste gas from the combustor 150. The turbine drives an alternator (not shown) that converts turbine shaft rotation into electrical power. The electrical power output by the turbogenerator 120 is controlled by the controller unit 200 according to the power requirements for the ancillary load(s) 160. A turbogenerator exhaust conduit 135 is provided at an outlet of the turbogenerator for disposal of exhaust gases.

A method of providing power to an ancillary electrical load using the apparatus of Figure 1 is as follows. The reciprocating engine 20 is switched off. The motor 230 is started up to provide power to the compressor 210. The valve 237 in the conduit 235 is open to permit airflow from the compressor 210 to the combustor 150. The compressor 210 rotates and draws in air from the air supply line 220. The air is compressed in the compressor 210 and exits the compressor into the conduit 235 and the air intake line 215 of the combustor 150, where it is mixed with fuel from the fuel supply line 125 to cause combustion. The resulting gas of the combustor 150 is employed to drive the turbine of the turbogenerator 120 for the generation of electrical power. The power generated is then distributed by the controller 200 to one or more ancillary loads 160. Waste gas from the turbogenerator is exhausted into the turbogenerator exhaust conduit 13 5 and into the atmosphere.

The fuel supply to the combustor 150 is preferably a different fuel to that used to fuel the reciprocating engine and in an embodiment can be liquified petroleum gas (LPG) or any appropriate combustible fuel.

In a further embodiment, the ancillary power generation apparatus 1 is employed to assist in the reduction of engine emissions whilst the engine 20 is running. During use of the reciprocating engine 20, the engine exhausts into exhaust conduit 62. The valve 37 in the EGR conduit 35 can be opened sufficiently such that a portion of the exhaust gas in the exhaust conduit 62 is permitted to flow to the inlet 70 of the turbine 60. The portion may be substantially fifty per cent of the exhaust gas in the exhaust conduit although other percentages are also envisaged. The remaining portion of the exhaust gas in the exhaust conduit 62 is diverted through the EGR conduit 35 for recycling through the engine 20. The portion of the exhaust gas that enters the turbine 60 is expanded in the turbine and used, as inlet air for the combustor 150. The inlet air may be supplemented by a compressed airstream from compressor 210 if necessary to provide sufficient oxygen for combustion. Otherwise, the valve 237 can be closed to prevent exhaust air flowing backwards through the conduit 235.

As in the previous embodiment, the combustor is a hydrocarbon based selective catalytic reduction stage combustor. It is envisaged that in an embodiment, the reciprocating engine 20 is a diesel engine. Where this is the case, combustion of the exhaust gas inside the combustor 150 uses up excess oxygen in the exhaust gas. This in turn permits use of a three-way catalytic converter 170 on the diesel engine, downstream of the combustor 150, for NOx reduction of the exhaust gas.

Furthermore, combustion of the diesel exhaust gases in the combustor 150 may burn off particulate matter in the gas, hence reducing particulate emissions in the exhaust gas. A particulate filter 180 may be installed in the exhaust conduit downstream of the combustor to further reduce particulate emissions.

In an embodiment, the combustor 150 is a two stage combustor having an oxidation stage and a reduction stage. Use of such a combustor may eliminate the requirement for an oxidation catalyst to reduce carbon monoxide in the exhaust gas as the combustor effectively becomes the oxidation stage.

Thus it can be seen that operation of the engine fitted with the auxiliary power generation apparatus can improve engine emissions in a number of ways.

The auxiliary power generation apparatus 1 can be installed on a vehicle reciprocating engine as shown schematically in Fig. 2 or it can be used in a stationary power generation apparatus for providing electrical power at a stationary site.

Various modifications may be made to the described embodiments without departing from the scope of the invention as defmed in the accompanying claims.

## Claims

1. An auxillary power generation apparatus for powering an ancillary electrical load whilst a reciprocating engine is switched off, the apparatus comprising a combustor arranged for disposal in an exhaust conduit of the reciprocating engine, a compressor arranged in fluid communication with an inlet of the combustor for the supply of compressed air to the combustor, a turbogenerator arranged for converting combustion product from the combustor into electrical energy, and a controller for controlling the supply of electrical energy to the ancillary electrical load.

2. An apparatus as claimed in claim 1 in which the combustor is a catalytic reduction stage combustor.

3. An apparatus as claimed in claim 1 in which the combustor comprises a first oxidation stage and a second reduction stage.

4. An apparatus as claimed in any of claims 1 to 3, in which the combustor fuel is different to the fuel used in the reciprocating engine.

5. An apparatus as claimed in any of claims 1 to 4, in which the compressor is an electrically driven compressor.

6. A vehicle comprising an apparatus as claimed in any previous claim.

7. A vehicle as claimed in claim 6, further comprising a turbocharger disposed in the engine exhaust conduit between the engine and the combustor.

8. A method of providing power to an ancillary electrical load whilst a reciprocating engine is switched off, the reciprocating engine having an exhaust conduit, a combustor disposed in the exhaust conduit, a compressor arranged in fluid communication with an inlet of the combustor for the supply of compressed air to the combustor , and a turbogenerator arranged to be driven by combustion gas from the combustor; the method comprising compressing air in the compressor, introducing the compressed air into the inlet of the combustor, mixing the compressed air with a fuel so as to cause combustion, using the combustion gas to drive the turbogenerator for the generation of electrical power, and supplying at least a portion of the electrical power to an ancillary electrical load.

9. A method of operating a reciprocating engine, the engine having an exhaust conduit, a combustor disposed in the exhaust conduit, the combustor having an inlet being in fluid communication with exhaust gas in the exhaust conduit, the method comprising introducing the exhaust gas into an inlet of the combustor, mixing the gas with a fuel so as to cause combustion, and exhausting the combusted gases to atmosphere.

10. A method as claimed in claim 9, further including the step of passing the exhaust gas through a catalytic converter and/or particulate filter prior to the step of exhausting the combusted gases to the atmosphere.

11. A method as claimed in claim 9 or claim 10 in which the reciprocating engine further comprises an exhaust gas recirculation system disposed between an air intake of the engine and the exhaust conduit, and in which a portion of the gas in the exhaust conduit is recirculated back into the air intake of the engine via the exhaust gas recirculation system and a portion of the gas in the exhaust conduit flows through the combustor.

12. A method as claimed in claim 11 in which the portion of gas flowing through the combustor comprises substantially 50% of the exhaust gas in the exhaust conduit.

13. A method as claimed in claim 9 or claim 10 or claim 11 or claim 12, in which the engine further comprises an air intake, and a turbocharger including a compressor disposed in an air conduit of the air intake, the method comprising the further step of compressing engine air in the compressor prior to it entering the air intake.

14. A method as claimed in claim 8 or claim 9 in which the combustor is a catalytic reduction stage combustor.

15. A method as claimed in claim 14 in which the combustor comprises a first oxidation stage and a second reduction stage.

16. A method as claimed in any of claims 8 to 15, comprising fuelling the combustor with a fuel that is different to the fuel used in the reciprocating engine.

## Patentansprüche

1. Hilfs-Energieerzeugungsvorrichtung zur Energieversorgung eines elektrischen Zusatzverbrauchers, während ein Kolbenmotor abgeschaltet ist, welche Vorrichtung einen zur Anordnung in einer Auspuffleitung des Kolbenmotors eingerichteten Combustor, einen in Fluidverbindung mit einem Einlass des Combustors angeordneten Kompressor zur Zufuhr von Druckluft zum Combustor, einen zur Umwandlung des Verbrennungsprodukts aus dem Combustor in elektrische Energie eingerichteten Turbogenerator und eine Steuerung zum Steuern der Zufuhr von elektrischer Energie zu dem elektrischen Zusatzverbraucher aufweist.

2. Vorrichtung nach Anspruch 1, bei welcher der Combustor ein Combustor mit katalytischer Reduktionsstufe ist.

3. Vorrichtung nach Anspruch 1, bei welcher der Combustor eine erste Oxidationsstufe und eine zweite Reduktionsstufe aufweist.

4. Vorrichtung nach einem der Ansprüche 1 bis 3, bei welcher der Combustor-Kraftstoff verschieden von dem im Kolbenmotor verwendeten Kraftstoff ist.

5. Vorrichtung nach einem der Ansprüche 1 bis 4 bei welcher der Kompressor ein elektrisch betriebener Kompressor ist.

6. Fahrzeug mit einer Vorrichtung nach einem vorhergehenden Anspruch.

7. Fahrzeug nach Anspruch 6, weiters mit einem Turbolader, der in der Auspuffleitung des Motors zwischen dem Motor und dem Combustor angeordnet ist.

8. Verfahren zum Liefern von Energie an einen elektrischen Zusatzverbraucher, während ein Kolbenmotor abgeschaltet ist, wobei der Kolbenmotor eine Auspuffleitung aufweist, ein Combustor in der Auspuffleitung angeordnet ist, ein Kompressor in Fluidverbindung mit einem Einlasskanal des Combustors angeordnet ist, um dem Combustor Druckluft zuzuführen, und ein durch Verbrennungsgas aus dem Combustor betreibbarer Turbogenerator angeordnet ist, welches Verfahren das Komprimieren von Luft im Kompressor, das Einleiten der Druckluft in den Einlass des Combustors, das Mischen der Druckluft mit einem Kraftstoff zur Bewirkung einer Verbrennung, das Verwenden des Verbrennungsgases zum Antrieb des Turbogenerators für die Erzeugung von elektrischer Energie und das Zuführen von zumindest einem Teil der elektrischen Energie zu einem elektrischen Zusatzverbraucher umfasst.

9. Verfahren zum Betreiben eines Kolbenmotors, welcher Motor eine Auspuffleitung aufweist, wobei in der Auspuffleitung ein Combustor angeordnet ist, der einen in Fluidverbindung mit Abgas in der Auspuffleitung stehenden Einlass aufweist, welches Verfahren das Einleiten von Abgas in einen Einlass des Combustors, das Mischen des Gases mit einem Kraftstoff zur Bewirkung einer Verbrennung und das Ausstoßen der verbrannten Gase in die Atmosphäre umfasst.

10. Verfahren nach Anspruch 9, weiters umfassend den Schritt des Leitens des Abgases durch einen katalytischen Konverter und/oder Partikelfilter vor dem Schritt des Ausstoßens der verbrannten Gase in die Atmosphäre.

11. Verfahren nach Anspruch 9 oder 10, bei welchem der Kolbenmotor weiters ein zwischen einem Luftansaugteil des Motors und der Auspuffleitung angeordnetes Abgasrezirkulationssystem aufweist, und bei welchem ein Teil des Gases in der Auspuffleitung über das Abgasrezirkulationssystem in den Luftansaugteil des Motors zurückgeführt wird und ein Teil des Gases in der Auspuffleitung durch den Combustor strömt.

12. Verfahren nach Anspruch 11, bei welchem der Teil des durch den Combustor strömenden Gases im Wesentlichen 50% des Abgases in der Auspuffleitung enthält.

13. Verfahren nach Anspruch 9 oder 10 oder 11 oder 12, bei welchem der Motor weiters einen Luftansaugteil und einen Turbolader mit einem Kompressor aufweist, welcher in einer Luftleitung des Luftansaugteils angeordnet ist, welches Verfahren den weiteren Schritt des Komprimierens von Motorluft im Kompressor vor deren Eintritt in den Luftansaugteil umfasst.

14. Verfahren nach Anspruch 8 oder 9, bei welchem der Combustor ein Combustor mit katalytischer Reduktionsstufe ist.

15. Verfahren nach Anspruch 14, bei welchem der Combustor eine erste Oxidationsstufe und eine zweite Reduktionsstufe aufweist.

16. Verfahren nach einem der Ansprüche 8 bis 15, umfassend das Betreiben des Combustors mit einem Kraftstoff, der verschieden von dem im Kolbenmotor verwendeten Kraftstoff ist.

## Revendications

1. Appareil de production d'énergie électrique auxiliaire pour alimenter une charge électrique auxiliaire alors qu'un moteur alternatif est éteint, l'appareil comprenant une chambre de combustion agencée pour être disposée dans un conduit d'échappement du moteur alternatif, un compresseur agencé en communication fluidique avec une entrée de la chambre de combustion pour la fourniture d'air comprimé à la chambre de combustion, un turbogénérateur agencé pour convertir un produit de combustion à partir de la chambre de combustion en énergie électrique, et un dispositif de commande pour commander la fourniture d'énergie électrique à la charge électrique auxiliaire.

2. Appareil selon la revendication 1, dans lequel la chambre de combustion est une chambre de combustion à étage de réduction catalytique.

3. Appareil selon la revendication 1, dans lequel la chambre de combustion comprend un premier étage d'oxydation et un second étage de réduction.

4. Appareil selon une quelconque des revendications 1 à 3, dans lequel le carburant de chambre de combustion est différent du carburant utilisé dans le moteur alternatif.

5. Appareil selon une quelconque des revendications 1 à 4, dans lequel le compresseur est un compresseur à entraînement électrique.

6. Véhicule comprenant un appareil selon une quelconque revendication précédente.

7. Véhicule selon la revendication 6, comprenant en outre un turbocompresseur disposé dans le conduit d'échappement de moteur entre le moteur et la chambre de combustion.

8. Procédé de fourniture d'énergie électrique à une charge électrique auxiliaire alors qu'un moteur alternatif est éteint, le moteur alternatif comportant un conduit d'échappement, une chambre de combustion disposée dans le conduit d'échappement, un compresseur agencé en communication fluidique avec une entrée de la chambre de combustion pour la fourniture d'air comprimé à la chambre de combustion, et un turbogénérateur agencé pour être entraîné par un gaz de combustion à partir de la chambre de combustion ; le procédé comprenant la compression d'air dans le compresseur, l'introduction de l'air comprimé dans l'entrée de la chambre de combustion, le mélange de l'air comprimé avec un carburant afin d'entraîner une combustion, l'utilisation du gaz de combustion pour entraîner le turbogénérateur pour la production d'énergie électrique, et la fourniture d'au moins une partie de l'énergie électrique à une charge électrique auxiliaire.

9. Procédé de fonctionnement d'un moteur alternatif, le moteur comportant un conduit d'échappement, une chambre de combustion disposée dans le conduit d'échappement, la chambre de combustion comportant une entrée en communication fluidique avec un gaz d'échappement dans le conduit d'échappement, le procédé comprenant l'introduction du gaz d'échappement dans une entrée de la chambre de combustion, le mélange du gaz avec un carburant afin d'entraîner une combustion, et l'échappement des gaz ayant subi une combustion vers l'atmosphère.

10. Procédé selon la revendication 9, comprenant en outre l'étape de passage du gaz d'échappement à travers un convertisseur catalytique et/ou un filtre contre les matières en suspension avant l'étape de l'échappement des gaz ayant subi une combustion vers l'atmosphère.

11. Procédé selon la revendication 9 ou la revendication 10, dans lequel le moteur alternatif comprend en outre un système de recirculation de gaz d'échappement disposé entre une admission d'air du moteur et le conduit d'échappement, et dans lequel une partie du gaz dans le conduit d'échappement est recirculée dans l'admission d'air du moteur par l'intermédiaire du système de recirculation de gaz d'échappement et une partie du gaz dans le conduit d'échappement s'écoule à travers la chambre de combustion.

12. Procédé selon la revendication 11, dans lequel la partie de gaz s'écoulant à travers la chambre de combustion comprend sensiblement 50% du gaz d'échappement dans le conduit d'échappement.

13. Procédé selon la revendication 9 ou la revendication 10 ou la revendication 11 ou la revendication 12, dans lequel le moteur comprend en outre une admission d'air, et un turbocompresseur comprenant un compresseur disposé dans un conduit d'air de l'admission d'air, le procédé comprenant l'étape supplémentaire de la compression d'air de moteur dans le compresseur avant son entrée dans l'admission d'air.

14. Procédé selon la revendication 8 ou la revendication 9, dans lequel la chambre de combustion est une chambre de combustion à étage de réduction catalytique.

15. Procédé selon la revendication 14, dans lequel la chambre de combustion comprend un premier étage d'oxydation et un second étage de réduction.

16. Procédé selon une quelconque des revendications 8 à 15, comprenant l'alimentation de la chambre de combustion avec un carburant qui est différent du carburant utilisé dans le moteur alternatif.
